# EUROPEAN PATENT SPECIFICATION

(11) **EP 1 705 817 B1**
(45) Date of publication and mention of the grant of the patent: **16.01.2008**
(21) Application number: 05017957.1
(22) Date of filing: 18.08.2005
(51) Int. Cl.: H04J 3/16, H04J 3/07, H04Q 11/04

(54) **Apparatus for transmitting data using virtual concatenation**
Vorrichtung zur Übertragung von virtuell verketteten Daten
Dispositif de transmission de données virtuellement concaténées

(30) Priority: 25.03.2005 JP 2005089912
(43) Date of publication of application: 27.09.2006
(73) Proprietor: FUJITSU LIMITED, Kawasaki-shi, Kanagawa 211-8588 (JP)
(72) Inventor: Saitoh, Satoru c/o Fujitsu Limited, Kawasaki-shi, Kanagawa 211-8588 (JP)
(74) Representative: HOFFMANN EITLE

(56) References cited:
- EP-A- 0 996 246
- EP-A- 1 143 650
- EP-A- 1 463 222

## Description

### BACKGROUND OF THE INVENTION

### 1. Field of the Invention

The present invention generally relates to a data transmission apparatus for transmitting data by using virtual concatenation.

### 2. Description of the Related Art

A synchronous network, such as a SONET (Synchronous Optical NETwork) (Registered Trademark)/SDH (Synchronous Digital Hierarchy), is used for passing multiple telephone lines through a high-speed transmission path by multiplexing the multiple telephone lines. In a case of increasing transmission speed by bundling basic units (standard rates) for transmission in such a network, the transmission rate is, normally, increased as multiples of a base rate, for example, 3 times, 12 times, or 48 times.

Meanwhile, in recent years and continuing, data transmission services using the Internet are being significantly developed. Furthermore, SONET (Registered Trademark)/SDH is used by many data transmission services. In these data transmission services, the necessary transmission bandwidth is different depending on the services provided. Furthermore, there is a demand for being able to minutely set the bandwidth to be occupied (used) in the SONET (Registered Trademark)/SDH network. Accordingly, a technology referred to as virtual concatenation is standardized by G.707/Y.1322 of ITU-T (International Telecommunication Union - Telecommunication Standardization Sector) for not only setting the basic transmission rate and its multiplied transmission rate, but also for freely setting (to some extent) the bandwidth.

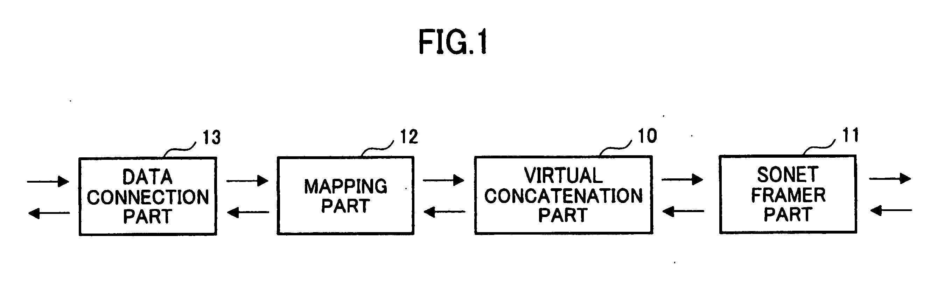

Fig.1 shows a configuration of a system using virtual concatenation. The system performs mapping on the data and transmits the data to the SONET (Registered Trademark). The virtual concatenation technology is applied to the system in which bandwidth is used by bundling multiple SONET (Registered Trademark) paths.

The system includes a data connection part 13, a mapping part 12, a virtual concatenation part 10, and a SONET (Registered Trademark) framer part 11.

For example, the data connection part 13 is for connecting signals such as Ethernet (Registered Trademark) signals, establishes a link, and conducts processes such as frame recognition. Currently, according to G.7041/Y.1303, the data signals that are standardized to be mapped for SONET (Registered Trademark) are, for example, 10M/100M/1G-Ethernet (Registered Trademark), Fibre-Channel, ESCON, FICON, and DVD-ASI.

The mapping part 12 is for conducting a process for making it easier for received data to be provided into the payload of SONET, for example, a process of conducting mutual conversion between GFP frames. Other than the GFP, a process of HDLC-like framing or ITU-T X.86 may be employed for the mapping part 12.

The virtual concatenation part 10 is for distributing data to multiple SONET (Registered Trademark) paths and collecting data from multiple SONET (Registered Trademark) paths, in compliance with G.707/Y.1322 of the ITU-T standard. The SONET (Registered Trademark) framer part 11 is for performing processes on SONET (Registered Trademark) signals such as adding/collecting overhead information. Furthermore, the SONET (Registered Trademark) framer part 11 converts electric signals to optical signals and connects to the SONET (Registered Trademark) network according to necessity.

With the above-described technology, bandwidth can be freely set with a transmission rate being a multiple of a basic transmission rate.

The conventional virtual concatenation technology, however, is only able to concatenate among paths having a transmission rate of STS-1 or STS-3c and having the same payload capacity.

Therefore, conventionally, in a case of transferring data with a transmission rate of 900 Mbps, for example, either STS-3c-7v (transmission rate 1048.32 Mbps) or STS-1-19v (919.296 Mbps) is to be selected. In such a case when STS-3c-7v is selected, there is a waste of bandwidth in which the bandwidth of 148 Mbps would be left unused. In such a case when STS-3c-7v is selected, a total of nineteen paths are required to be managed. This results in reduction in the efficiency of path management.

EP-A-1 463 222 discloses that high capacity data is divided into the plurality of low capacity virtual containers and transmitted via the plurality of channels (STM(1), STM(2), ..., STM(n)) which configure a communication network (3) based on clocks at the respective channels. A multiplexed frame acquiring unit (1M1, 1N2) acquires a multiplexed frame (STM-N) in which mapping, accompanying delay absorption processings corresponding to transmission states at respective channels, has been carried out based on a reference clock with respect to the virtual containers at the respective channels included in a plurality of frames including the plurality of low capacity virtual containers. A pointer value detecting unit (1E1, 1E2, 1K) successively detects a plurality of pointer values for respectively evaluating transmission states at the plurality of channels (STM(1), STM(2), ..., STM (n) ) which configure the communication network (3), and successively corrects the plurality of pointer values based on variations in phases at the respective channels to be detected from phase differences between the clocks at the respective channels and the reference clock. A display unit (11) indicates the plurality of pointer values, at the same time, corresponding to the plurality of channels (STM(1), STM(2), ..., STM(n)).

EP-A-1 143 650 discloses that in order to increase the efficiency of large-capacity transmission, the continuity of divided signals generated by dividing a multiplexed signal is maintained and the original large-capacity multiplexed signal is restored. A signal dividing section divides a multiplexed signal to generate a plurality of divided signals in the STS or STM transmission interface format. A guarantee information adding section adds guarantee information for guaranteeing the continuity of the divided signals to each of the divided signals to generate transmission signals. A signal sending section sends the transmission signals via a transmission line in the transmission interface format. A signal receiving section receives the transmission signals. A signal restoring section restores the multiplexed signal by constructing the divided signals on the basis of the guarantee information.

EP-A-0 996 246 discloses that a communications systems utilises inverse multiplexing to transfer wide band signals over a plurality of narrow band links. To enable efficient use of the available links, incoming data whether or not cell or packet based, is inverse multiplexed in a byte format regardless of packet boundaries into virtual containers. Overhead signals are generated to enable the original data to be reassembled at the receiving end.

### SUMMARY OF THE INVENTION

It is a general object of the present invention to provide a transmission apparatus that substantially obviates one or more of the problems caused by the limitations and disadvantages of the related art.

According to the present invention, there is provided a transmission apparatus for transmitting input data to a plurality of paths by using virtual concatenation as set out in Claim 1.

The present invention also provides a transmission apparatus for transmitting input data to a plurality of paths by using virtual concatenation as set out in Claim 3.

Optional features are set out in the other claims.

Features and advantages of embodiments will be set forth in the description which follows, and in part will become apparent from the description and the accompanying drawings, or may be learned by practice of the embodiments according to the teachings provided in the description. Objects as well as other features and advantages of the embodiments will be realized and attained by transmission apparatus particularly pointed out in the specification in such full, clear, concise, and exact terms as to enable a person having ordinary skill in the art to practice the invention.

In the transmission apparatus according to an embodiment of the present invention, the transmission apparatus may further include a fixed stuff insertion part for inserting fixed stuff bytes into the data distributed to the paths other than the path having the lowest transmission rate.

In the transmission apparatus according to an embodiment of the present invention, the data distributed to each path may be a payload unit of each path.

In the transmission apparatus according to an embodiment of the present invention, the data distribution part may distribute the input data to the paths as determined by the distribution proportion determining part in cycles.

In the transmission apparatus according to an embodiment of the present invention, the data distributing part may include a select part for outputting a predetermined amount of data to a corresponding path, and an order control part for instructing the select part to output the predetermined amount of data to the corresponding path.

In the transmission apparatus according to an embodiment of the present invention, the transmission apparatus may further include a path generating part for inserting POH into the data output from the select part.

In the transmission apparatus according to an embodiment of the present invention, the transmission apparatus may further include a framer part for assembling the data into which the POH is inserted.

Other objects and further features of embodiments will be apparent from the following detailed description when read in conjunction with the accompanying drawings.

### BRIEF DESCRIPTION OF THE DRAWINGS

Further objects, features and advantages of embodiments will become more apparent from the detailed description and the accompanying drawings.
Fig.1 is a block diagram showing a configuration of a system using virtual concatenation;
Fig.2 is a block diagram showing a transmission apparatus according to an embodiment of the present invention;
Fig.3 is block diagram showing a hardware configuration of a transmission apparatus according to an embodiment of the present invention;
Fig.4 is a block diagram showing a mapper part and a SONET framer part according to an embodiment of the present invention;
Fig.5 is a block diagram showing a SONET de-framer part and a mapper part according to an embodiment of the present invention;
Fig.6 is a schematic drawing for describing transmission conducted with STS-3c and STS1-2v (Part 1) according to an embodiment of the present invention;
Fig.7 is a schematic drawing for describing a method of inserting Fixed Stuff according to an embodiment of the present invention;
Fig.8 is a schematic drawing for describing transmission conducted with STS-3c and STS1-2v (Part 2) according to an embodiment of the present invention; and
Fig.9 is a schematic drawing for describing a method of distributing data according to an embodiment of the present invention

### DESCRIPTION OF THE PREFERRED EMBODIMENT

Embodiments of the present invention are described below with reference to the drawings.

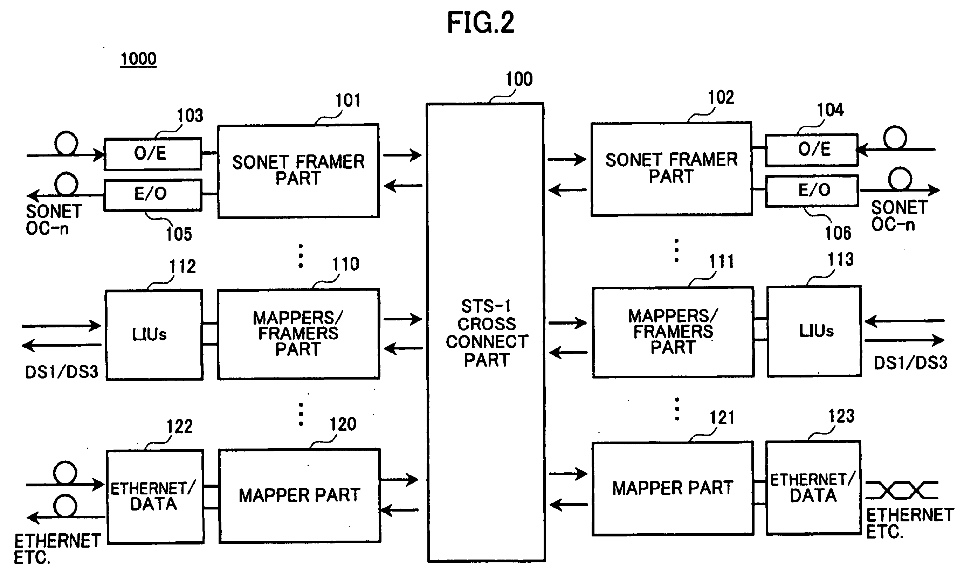

Fig.2 is a block diagram showing a transmission apparatus 1000 according to an embodiment of the present invention. As shown in Fig.2, the transmission apparatus 1000 includes a cross-connect part 100, a SONET (Registered Trademark) framer parts 101, 102, O/E conversion parts 103, 104, E/O conversion parts 105, 106, Mapper/Framer parts 110, 111, LIU (Line Interface Units) 112, 113, Mapper parts 120, 121, and Ethernet (Registered Trademark)/DATA parts 122, 123.

The cross-connect part 100 is a cross-connect switch. The O/E conversion parts 103, 104 convert optical signals to electric signals. The E/O conversion parts 105, 106 convert electric signals to optical signals. The SONET (Registered Trademark) framer parts 101, 102 are framers for SONET. The LIUs 112, 113 are units serving as line interfaces. The Mapper/Framer parts 110, 111 are mappers and framers with respect to lines. The Ethernet (Registered Trademark) /DATA parts 122, 123 are interfaces between the Ethernet and data. The mapper parts 120, 121 are mappers with respect to Ethernet (Registered Trademark).

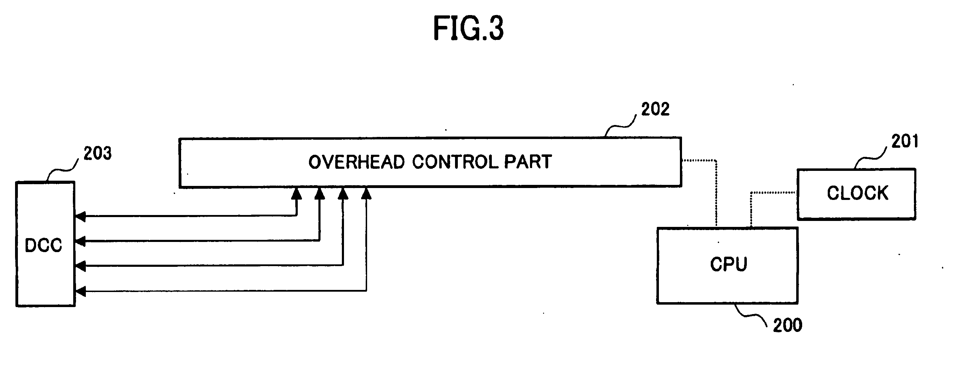

The transmission apparatus 1000 according to an embodiment of the present invention is described below in a case where the input is SONET (Registered Trademark) and the output is a connection (network) other than SONET (Registered Trademark) and in a case where the input is a connection (network) other than SONET (Registered Trademark) and the output is SONET (Registered Trademark). A basic hardware configuration of the transmission apparatus 1000 according to an embodiment of the present invention is described with reference to Fig.3. The hardware configuration is mainly illustrated with parts that are directly related to the transmission apparatus 1000 according to the embodiment of the present invention, but is not to be limited to those shown in Fig.3. The hardware configuration of the transmission apparatus 1000 includes a CPU 200, a clock 201, an overhead control part 202, and a DCC (Data Communication Channel) 203.

The CPU 200 performs overall control of the transmission apparatus 1000. The clock 201 supplies clock(s) to the transmission apparatus 1000. The DCC 203 serves as a channel for data communication. The overhead control part 202 is a part for inserting/extracting/analyzing SONET (Registered Trademark) overhead information.

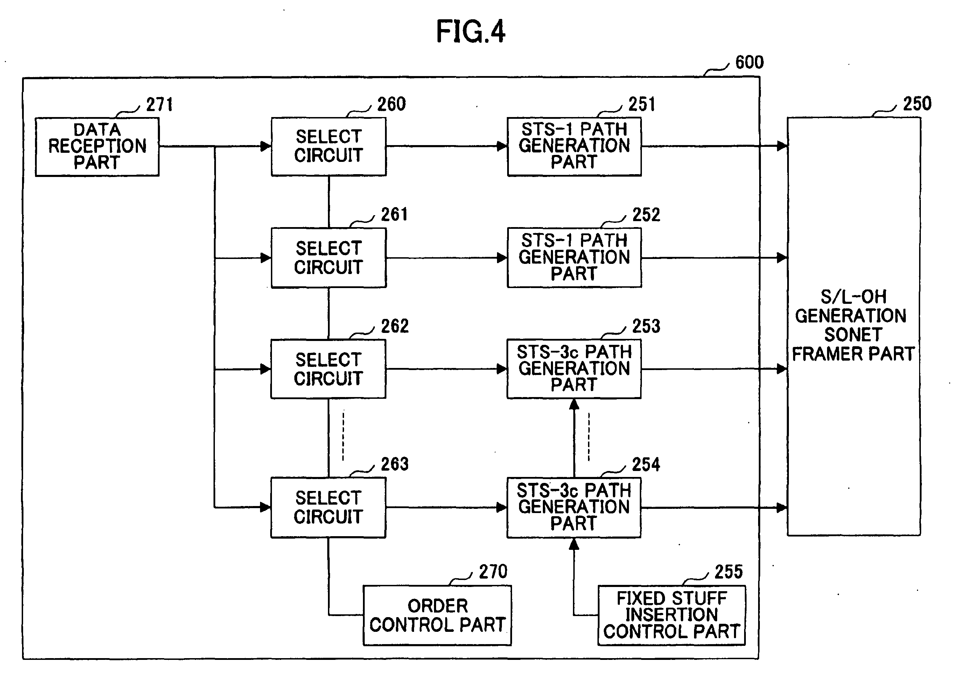

Next, a process of outputting data input from line or Ethernet (Registered Trademark) to SONET (Registered Trademark) is described. First, an inside configuration of a mapper/framer part 110 and a mapper part 120 to which data are input (hereinafter collectively referred to as "mapper part 600") is described with reference to Fig.4.

Fig.4 shows the mapper part 600 and a SONET (Registered Trademark) framer part 250. Here, the SONET framer part 250 corresponds to the SONET framer part 102 shown in Fig.2, and the cross-connect part 100 shown in Fig.2 is abbreviated.

The mapper part 600 includes a data reception part 271, select circuits 260, 261, 262, 263, order control part 270, STS-1 path generation parts 251, 252, STS-3c path generation parts 253, 254, and a fixed stuff insertion part 255.

The data reception part 271 outputs the original data to be distributed in accordance with the total rate of the virtual concatenation (i.e. final rate). The order control part 270 sequentially gives instructions to the select circuits 260, 261, 262, 263 which are used in accordance with the combination of the virtual concatenation for reading out data of a predetermined byte(s). The number of bytes that are to be read out is determined by the CPU 200 (i.e. distribution proportion determining part) in accordance with the combination of the virtual concatenation (combination of the transmission rates of the paths).

The select circuits 260, 261, 262, and 263 output data to the STS-1 path generation parts 251, 252 and the STS-3c path generation parts 253, 254 only when instructed by the order control part 270. The STS-1 path generation parts 251, 252 and the STS-3c path generation parts 253, 254 apply a predetermined format to the input data and add POH (Path OverHead) thereto. Since only payload is to be input, the path overhead is added by inserting FIX, for example.

The fixed stuff insertion control part 255 (i.e. fixed stuff byte insertion part) inserts fixed stuff according to necessity. The SONET framer part 250 multiplexes the paths in a predetermined order and outputs the input data to optical signals.

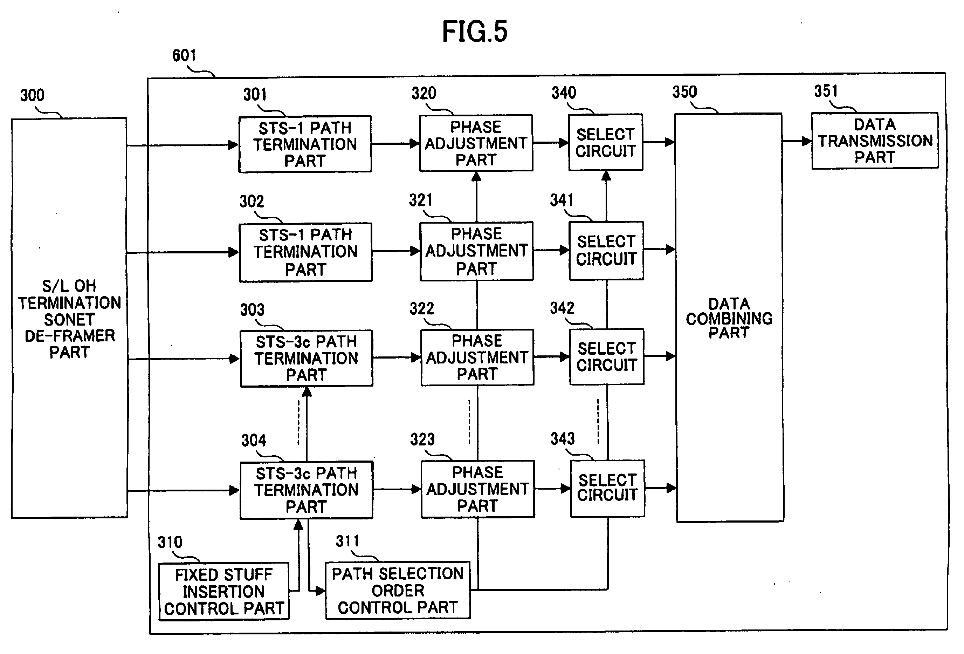

Next, a process of outputting data input from SONET (Registered Trademark) to line or Ethernet (Registered Trademark) is described. First, an inside configuration of a mapper/framer part 111 and a mapper part 121 to which data are input (hereinafter collectively referred to as "mapper part 601") is described with reference to Fig.5.

Fig.5 shows the mapper part 601 and a SONET de-framer part 300. Here, the SONET de-framer part 300 corresponds to the SONET (Registered Trademark) framer part 101 shown in Fig.2, and the cross-connect part 100 shown in Fig.2 is abbreviated.

The mapper part 601 includes STS-1 path termination parts 301, 302, STS-3c path termination parts 303, 304, a fixed stuff insertion control part 310, a path selection order control part 311, phase adjustment parts 320, 321, 322, 323, select circuits 340, 341, 342, 343, and a data composition part 350.

The SONET de-framer part 300 separates each multiplexed path and delivers the paths to the corresponding path termination parts 301, 302, 303, and 304 in a predetermined order. The STS-1 path termination parts 301, 302 and the STS-3c path termination parts 303, 304 obtain the POH and extract the payload therefrom. The fixed stuff insertion control part 310 eliminates the inserted fixed stuff according to necessity. The phase adjustment parts 320, 321, 322, and 323 obtain the arrival time for each path based on the POH and perform matching of virtual concatenation headings.

The path selection order control part 311 selects the path to use according to the combination of virtual concatenation, and sequentially instructs the select circuits 340, 341, 342, and 343 to read out data of a predetermined number of bytes. The select circuits 340, 341, 342, and 343 output data only when instructed by the path selection order control part 311. The data combining part 350 combines data obtained from the select circuits 340, 341, 342, and 343, reproduces the original data, and outputs the reproduced data to the data transmission part 351.

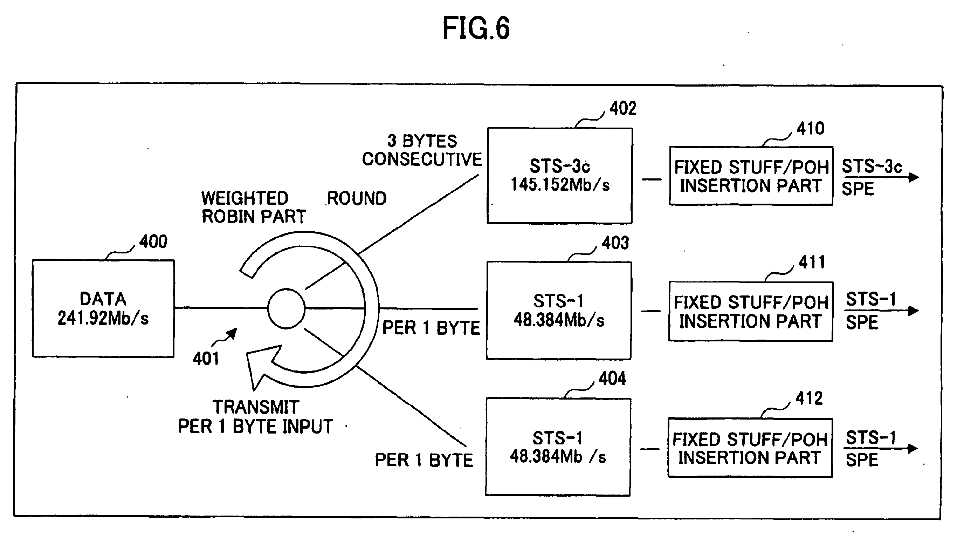

Next, a process of transmitting data by inserting fixed stuff bytes into data distributed to a path having a transmission rate greater than a path having the least transmission rate is described with reference to Fig.6. Fig.6 is a block diagram showing data being mapped to SONET (Registered Trademark), in which the data are transmitted with STS-3c (forced fixed stuff bytes) and STS-1-2v. The example shown in Fig.6 is a case where the maximum transmission rate is 241.92 Mbps. In Fig.6, reference numerals 400, 402, 403, and 404 indicate data, reference numeral 401 indicates a WRR part (Weight Round Robin), and reference numerals 410, 411, and 411 indicate fixed stuff/POH insertion parts.

The data 400 are input data with a transmission rate of 241.92 Mbps. The data 402 are data transmitted by STS-3c with a transmission rate of 145.152 Mbps. The data 403, 404 are transmitted by STS-1 with a transmission rate of 48.384 Mbps. The WRR part 401 corresponds to the select circuits 260-263 and the path generation parts 251-254. The WRR part 401 is a part for distributing data at a predetermined rate with respect to multiple target paths, in which the data is cyclically distributed to the target output paths (i.e. distributed in cycles). The fixed stuff/POH insertion parts 410, 411, and 412 generate data for forming SONET (Registered Trademark) paths and insert necessary overhead information and zero data at a timing corresponding to the POH and the fixed stuff, respectively.

In Fig.6, the rate of the distributed data is set in a proportion of 3:1:1, in which the input data are sequentially divided and output in 3 bytes, 1 byte, and 1 byte. Accordingly, the distribution proportion is set so that the data (rate) distributed to the paths other than the path having the lowest transmission rate is an integral multiple of the data (rate) distributed to the STS-1 path having the lowest transmission rate.

Accordingly, the distribution proportion is set such that it is an integral multiple of the rate distributed to a path(s), other than the STS-1 path having the lowest transmission rate (e.g. STS-3c path).

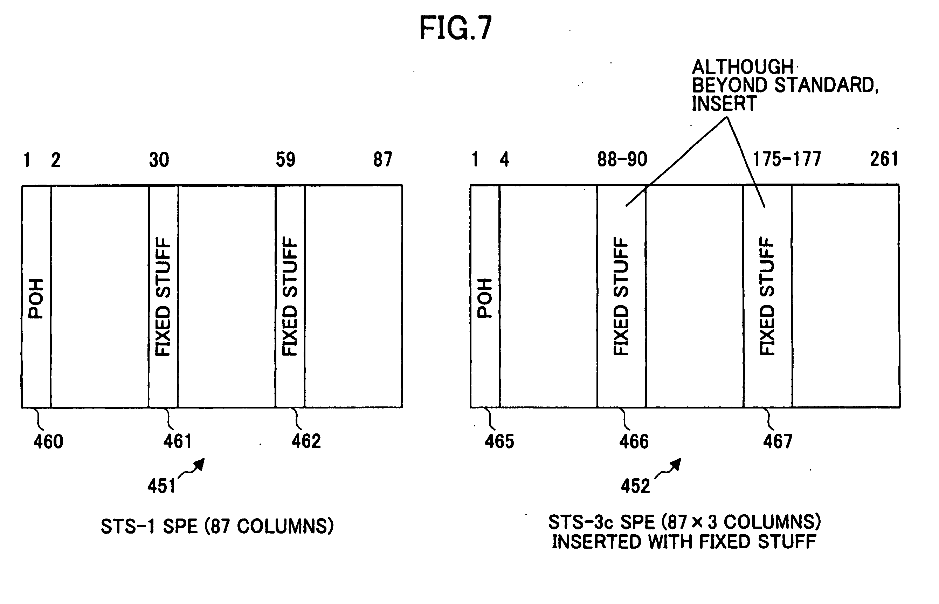

Next, a method of inserting fixed stuff is described with reference to Fig.7. Fig.7 shows configurations of an STS-1 SPE (Synchronous Payload Envelope) 451 and an STS-3c SPE 452. The STS-1 SPE 451 has a POH 460 provided at a heading portion thereof and two fixed stuffs 461, 462 inserted therein. Furthermore, the STS-3c SPE 452 has a POH 465 provided at a heading portion thereof and two fixed stuffs 466, 467 inserted therein.

Accordingly, the fixed stuff bytes inserted in the STS-3c SPE 452 are 3 times the fixed stuff byte used in the STS-1. That is, the STS-3c SPE 452 has inserted fixed stuff that is beyond the standard amount (size). Thus, since the payload amount that is desired for generating a single SONET (Registered Trademark) frame within a prescribed time period is set to an integral proportion of 3:1:1, the data output from the WRR part 401 can be sufficiently contained in the target paths. In addition, this allows simplification of circuit configuration.

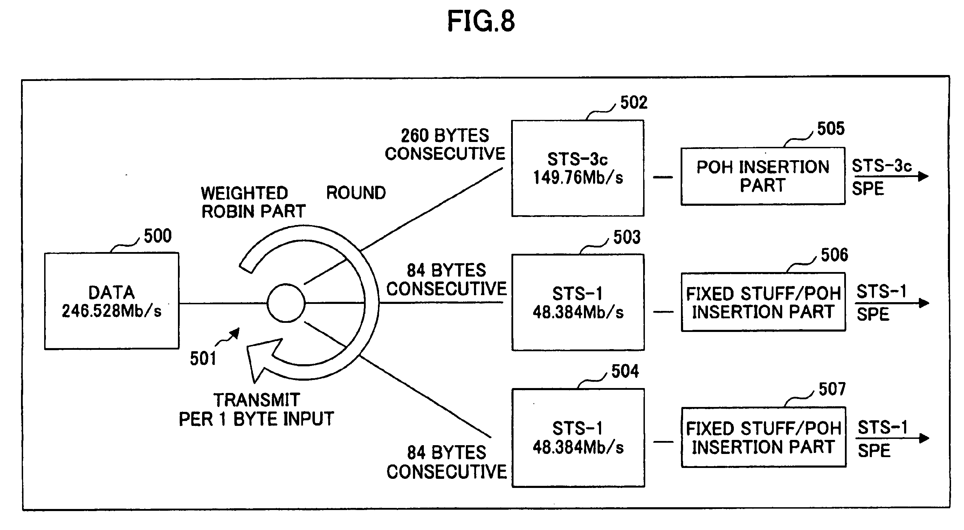

Next, a process of transmitting data amounting to a single payload unit for each path is described with reference to Fig.8. Fig.8 shows an example of data transmission by STS-3c (regular) and STS1-2v with a maximum transmission rate of 246.528 Mbps.

The data 500 is input data with a transmission rate of 246.528 Mbps. The data 502 are transmitted by STS-3c with a transmission rate of 149.76 Mbps. The data 503, 504 are transmitted by STS-1 with transmission rates of 48.384 Mbps. The WRR part 501 is set with a transmission rate of 260:84:84 with respect to the target output destination, to thereby sequentially divide the input data into 260 bytes, 84 bytes, and 84 bytes and distribute the data to the target output destination. Accordingly, the distribution proportion is determined in accordance with the transmission rate of each path.

The POH insertion part 505 inserts POH into the STS-3c 502. The fixed stuff/POH insertion parts 506 and 507 generate data for forming SONET (Registered Trademark) paths and insert necessary overhead information and zero data at a timing corresponding to the POH and the fixed stuff.

In such manner, data are consecutively output in single payload units. Furthermore, the payload amount that is desired for generating a single SONET (Registered Trademark) frame within a prescribed time period is set to an integral proportion of 260:84:84. Accordingly, the data output from the WRR part 501 can be sufficiently contained in the target paths. In addition, this allows simplification of circuit configuration.

In the reception side, after performing a conventional frame matching of virtual concatenation, the reception side may automatically determine whether fixed stuff beyond a standard is included and reproduce data by conducting a procedure in a completely opposite order.

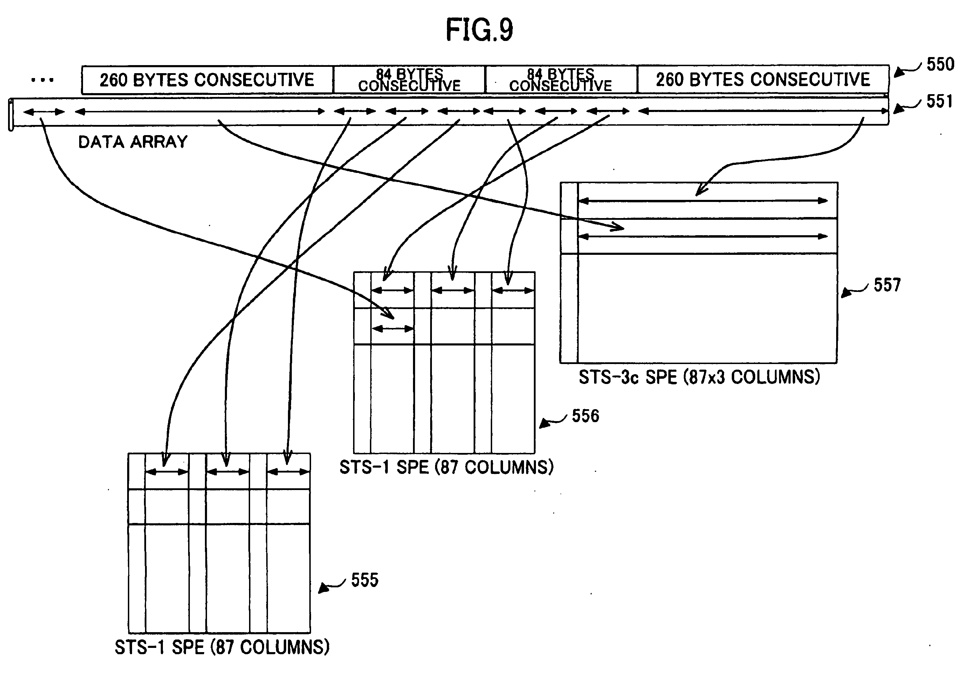

Next, the consecutively output data are described with reference to Fig.9. Fig.9 shows consecutive data 550, a data array 551, an STS-3c SPE 557, and STS-1 SPE 555 and 556.

In Fig.9, the consecutive data 550 include consecutive data of 260 bytes, 84 bytes, 84 bytes, and 260 bytes. The first 260 bytes are the data of the STS-3c SPE 557. The next 84 bytes are the data of the STS-1 SPE 555 which are divided into three parts (each part having 28 bytes). The next yet 84 bytes are the data of the STS-1 SPE 556 which are divided into three parts (each part having 28 bytes).

Accordingly, with the transmission apparatus 1000 according to the above-described embodiment of the present invention, data can be distributed so that the distribution of data enables the payload rate of multiple paths having different transmission rates to have simple integral proportions. Thus, multiple paths having different transmission rates can be combined with a simple circuit configuration.

With the transmission apparatus 1000 according to above-described embodiment of the present invention, in a case where, for example, data transmission of 900 Mbps is necessary, the data transmission can be accomplished with STS-3c-6V and STS-1 by applying the process shown in Fig.8. In this exemplary case, seven paths are to be managed, and channels amounting to nineteen STS-1 channels are to be employed in the SONET (Registered Trademark).

Although seven paths are also employed in a conventional example where STS-3c-7V is selected for data transmission of 900 Mbps, channels amounting to twenty one STS-1 channels are to be employed in the conventional example. That is, two additional STS-1 channels are required in the conventional example.

Furthermore, although channels amounting to nineteen STS-1 channels are also employed in a conventional example where STS1-19v is selected, the number of paths required for management increases considerably to nineteen paths in the conventional example.

Therefore, with the transmission apparatus 1000 using virtual concatenation according to the embodiment of the present invention, the number of paths to be managed can be reduced to a minimal amount and the waste of bandwidth can be prevented.

Furthermore, with the above-described process (method) according to the embodiment of the present invention, the virtual concatenation can be performed on multiple paths with different transmission rates including high-speed paths that are multiplexed even further (e.g. STS-12c, STS-48c).

Further, the present invention is not limited to these embodiments, but variations and modifications may be made without departing from the scope of the present invention.

## Claims

1. A transmission apparatus for transmitting input data to a plurality of paths by using virtual concatenation on the paths, the paths including at least one path having a transmission rate that is different from the transmission rate of another of the paths, the transmission apparatus comprising a mapper (600) **characterised by**:
a data distributing (271)part for distributing the input data to the paths; and
a distribution proportion determining part (200)for determining the proportion of the input data to be distributed to each path;
wherein the distribution proportion determining part is configured to determine the proportion of the input data to be distributed so that the amount of data distributed to each path other than the path having the lowest transmission rate is an integral multiple of the amount of data distributed to the path having the lowest transmission rate.

2. The transmission apparatus as claimed in Claim 1, further comprising a fixed stuff insertion part (255) for inserting fixed stuff bytes into the data distributed to the paths other than the path having the lowest transmission rate.

3. A transmission apparatus for transmitting input data to a plurality of paths by using virtual concatenation on the paths, the paths including at least one path having a transmission rate that is different from the transmission rate of another of the paths, the transmission apparatus comprising a mapper (Fig. 6) **characterized by** :
a data distributing part (271) for distributing the input data to the paths; and
a distribution proportion determining part (200) for determining the proportion of the input data to be distributed to each path;
wherein the distribution proportion determining part is configured to determine the proportion of the input data to be distributed to each path based on the transmission rates of the paths.

4. The transmission apparatus as claimed in Claim 3, wherein the data distributing part is configured to distribute data to each path comprising a payload unit of each path.

5. The transmission apparatus as claimed in Claim 1 or Claim 3, wherein the data distributing part is configured to distribute the input data to the paths as determined by the distribution proportion determining part in cycles.

6. The transmission apparatus as claimed in Claim 5 wherein the data distributing part includes a select part (260-263) for outputting a predetermined amount of data to a corresponding path, and an order control part (270)for instructing the select part to output the predetermined amount of data to the corresponding path.

7. The transmission apparatus as claimed in Claim 6, further comprising:
a path generating part (251-24)for inserting POH into the data output from the select part.

8. The transmission apparatus as claimed in Claim 7, further comprising:
a framer part (250) for assembling the data into which the POH is inserted.

## Patentansprüche

1. Eine Übertragungsvorrichtung zum Übertragen von Eingabedaten an eine Vielzahl von Pfaden unter Benutzung von virtueller Verkettung (Englisch: Concatenation) auf den Pfaden, wobei die Pfade mindestens einen Pfad mit einer von den Übertragungsraten der anderen Pfade verschieden Übertragungsrate umfassen, die Übertragungsvorrichtung umfassend eine Abbildungsvorrichtung (Englisch: Mapper) (600), die **gekennzeichnet ist durch**:
einen Datenverteilungsbestandteil (271) zum Verteilen der Eingabedaten auf die Pfade; und
einen Bestandteil (200) zum Bestimmen der Verteilungsquoten zum Bestimmen der Quote der in einen jeweiligen Pfad zu verteilenden Eingabedaten;
wobei der Bestandteil zum Bestimmen der Verteilungsquoten dazu ausgebildet ist, die Quoten der zu verteilenden Eingabedaten so zu bestimmen, dass die Menge der auf einem jeweiligen, von dem Pfad mit der niedrigsten Übertragungsrate verschiedenen Pfad verteilten Daten ein ganzzahliges Vielfaches der Menge der auf dem Pfad mit der niedrigsten Übertragungsrate verteilten Daten sind.

2. Die Übertragungsvorrichtung nach Anspruch 1, ferner umfassend einen Bestandteil zum Einfügen von unveränderlichem Zeug (Englisch: Stuff) (255) zum Einfügen von Bytes mit unveränderlichem Zeug in die von dem Pfad mit der niedrigsten Übertragungsrate verschiedenen Pfade verteilten Daten.

3. Eine Übertragungsvorrichtung zum Übertragen von Eingabedaten auf eine Vielzahl von Pfaden unter Benutzung von virtueller Verkettung (Englisch: Concatenation) auf den Pfaden, wobei die Pfade mindestens einen Pfad mit einer von der Transmissionsrate der anderen Pfade verschiedenen Transmissionsrate, die Übertragungsvorrichtung umfassend eine Abbildungsvorrichtung (Englisch: Mapper) (Fig. 6), die **gekennzeichnet ist durch**:
einen Datenverteilungsbestandteil (271) zum Verteilen der Eingabedaten auf die Pfade; und
einen Bestandteil (200) zum Bestimmen der Verteilungsquoten zum Bestimmen der Quote der auf die jeweiligen Pfade zu verteilenden Eingabedaten;
wobei der Bestandteil zum Bestimmen der Verteilungsquoten dazu ausgebildet ist, die Quoten der auf die jeweiligen Pfade zu verteilenden Eingabedaten zu bestimmen basiert auf den Übertragungsraten auf den Pfaden.

4. Die Übertragungsvorrichtung nach Anspruch 3, wobei der Datenverteilungsbestandteil dazu ausgebildet ist, Daten auf einen jeweiligen Pfad mit einer Nutzlasteinheit des jeweiligen Pfads zu verteilen.

5. Die Übertragungsvorrichtung nach Anspruch 1 oder Anspruch 3, wobei der Datenverteilungsbestandteil dazu ausgebildet ist, die Eingabedaten auf die Pfade zu verteilen, wie das durch den Bestandteil zum Bestimmen der Verteilungsquoten in Zyklen bestimmt wird.

6. Die Übertragungsvorrichtung nach Anspruch 5, wobei der Datenverteilungsbestandteil umfasst: einen Auswahlbestandteil (260-263) zum Ausgeben einer vorbestimmten Menge von Daten auf einen entsprechenden Pfad, und einen Bestandteil (270) zur Steuerung der Reihenfolge zum Anweisen des Auswahlbestandteils, die vorbestimmte Menge von Daten auf den entsprechenden Pfad auszugeben.

7. Die Übertragungsvorrichtung nach Anspruch 6, ferner umfassend:
einen Pfaderzeugungsbestandteil (251-254) zum Einfügen von POH in die Datenausgabe aus dem Auswahlbestandteil.

8. Die Übertragungsvorrichtung nach Anspruch 7, ferner umfassend:
einen Datenrahmenbestandteil (Englisch: Framer) (250) zum Zusammensetzen der Daten, in die der POH eingefügt wird.

## Revendications

1. Appareil de transmission pour transmettre des données d'entrée à une pluralité de chemins en utilisant une concaténation virtuelle sur les chemins, les chemins incluant au moins un chemin ayant un débit de transmission qui est différent du débit de transmission d'un autre des chemins, l'appareil de transmission comprenant une unité d'adressage (600), **caractérisé par** :
une partie de distribution de données (271) pour distribuer les données d'entrée aux chemins ; et
une partie de détermination de proportion de distribution (200) pour déterminer la proportion des données d'entrée devant être distribuées à chaque chemin;
dans lequel la partie de détermination de proportion de distribution est configurée pour déterminer la proportion des données d'entrée devant être distribueés de sorte que la quantité de données distribuées à chaque chemin autre que le chemin ayant le débit de transmission le plus bas est un multiple entier de la quantité de données distribuées au chemin ayant le débit de transmission le plus bas.

2. Appareil de transmission selon la revendication 1, comprenant de plus une partie d'insertion de remplissage fixe (255) pour insérer des octets de remplissage fixe dans les données distribuées aux chemins autres que le chemin ayant le débit de transmission le plus bas.

3. Appareil de transmission pour transmettre des données d'entrée à une pluralité de chemins en utilisant une concaténation virtuelle sur les chemins, les chemins incluant au moins un chemin ayant un débit de transmission qui est différent du débit de transmission d'un autre des chemins, l'appareil de transmission comprenant une unité d'adressage (figure 6) **caractérisé par**:
une partie de distribution de données (271) pour distribuer les données d'entrée aux chemins ; et
une partie de détermination de proportion de distribution (200) pour déterminer la proportion des données d'entrée devant être distribueés à chaque chemin ;
dans lequel la partie de détermination de proportion de distribution est configurée pour déterminer la proportion des données d'entrée devant être distribueés à chaque chemin sur base des débits de transmission des chemins.

4. Appareil de transmission selon la revendication 3, dans lequel la partie de distribution de données est configurée pour distribuer des données à chaque chemin comprenant une unité de charge utile de chaque chemin.

5. Appareil de transmission selon la revendication 1 ou la revendication 3, dans lequel la partie de distribution de données est configurée pour distribuer les données d'entrée aux chemins ainsi que déterminé par la partie de détermination de proportion de distribution par cycles.

6. Appareil de transmission selon la revendication 5, dans lequel la partie de distribution de données inclut une partie de sélection (260 à 263) pour sortir une quantité prédéterminée de données vers un chemin correspondant, et une partie de commande d'ordre (270) pour charger la partie de sélection de sortir la quantité prédéterminée de données vers le chemin correspondant.

7. Appareil de transmission selon la revendication 6, comprenant en outre :
une partie de génération de chemin (251 à 254) pour insérer un POH dans les données sorties de la partie de sélection.

8. Appareil de transmission selon la revendication 7, comprenant en outre :
une partie formant processeur de trames (250) pour assembler les données dans lesquelles le POH est inséré.
